(19) **Europäisches Patentamt**
**European Patent Office**
**Office européen des brevets**

(11) **EP 3 988 414 A1**

(12) **EUROPEAN PATENT APPLICATION**
published in accordance with Art. 153(4) EPC

(43) Date of publication:
**27.04.2022 Bulletin 2022/17**

(21) Application number: **20833093.6**

(22) Date of filing: **24.06.2020**

(51) International Patent Classification (IPC):
**B60W 30/165** (2020.01)    **B60W 30/10** (2006.01)
**B60W 40/02** (2006.01)    **B60W 10/20** (2006.01)
**B60W 30/045** (2012.01)    **B60W 40/105** (2012.01)
**B60W 50/029** (2012.01)    **B60W 50/14** (2020.01)
**B62D 47/02** (2006.01)    **G08G 1/00** (2006.01)

(52) Cooperative Patent Classification (CPC):
**B60W 10/20; B60W 30/045; B60W 30/10;
B60W 30/165; B60W 40/02; B60W 40/105;
B60W 50/00; B60W 50/029; B60W 50/14;
B62D 47/02; G08G 1/00**

(86) International application number:
**PCT/KR2020/008121**

(87) International publication number:
**WO 2020/262907 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **24.06.2019  KR 20190075074**

(71) Applicant: **Korea Advanced Institute of Science
and Technology
Daejeon 34141 (KR)**

(72) Inventors:
• **CHOI, Sei-Bum**
  **Daejeon 34141 (KR)**
• **LEE, Jongo-Hyup**
  **Daejeon 34141 (KR)**

(74) Representative: **Michalski Hüttermann & Partner
Patentanwälte mbB
Speditionstraße 21
40221 Düsseldorf (DE)**

(54) **BUS SYSTEM CONNECTED BY MECHANICAL LINK, AND DEVICE AND METHOD FOR CONTROLLING SAME BUS SYSTEM**

(57)    The present invention relates to a bus system connected by a mechanical link, and an apparatus and a method for controlling such a bus system, more particularly, to an apparatus and a method, in driving of a bus system including a front vehicle driven by a driver and a rear vehicle connected to the front vehicle by the mechanical link and without a driver, for controlling each of the front vehicle and the rear vehicle so that the rear vehicle performs autonomous driving based on front vehicle information and sensor information.

According to the present invention, the passenger capacity of the bus is increased, but the manufacturing cost is lowered and smooth maintenance is possible, and the safety is guaranteed in case of a sudden failure or error of the system, and the passenger capacity is flexible as needed. It provides a bus system that enables change, and also minimizes the width of the road occupied when the vehicle turns (turning width) and enables smooth driving on the slope, so that there is no loss of performance of the vehicle compared to the conventional general bus and that does not require additional training or attention of the driver due to such problems in driving.

【Figure 9】

【Figure 9】

**Description**

[Technical Field]

The present invention relates to a bus system connected by a mechanical link, and an apparatus and a method for controlling such a bus system, and more particularly, to an apparatus and a method, in the operation of a bus system consisting of a front vehicle driven by a driver and a rear vehicle connected to the front vehicle by a mechanical link and without a driver, for controlling each of the front vehicle and the rear vehicle so that the rear vehicle performs autonomous driving based on front vehicle information and sensor information.

[Background Art]

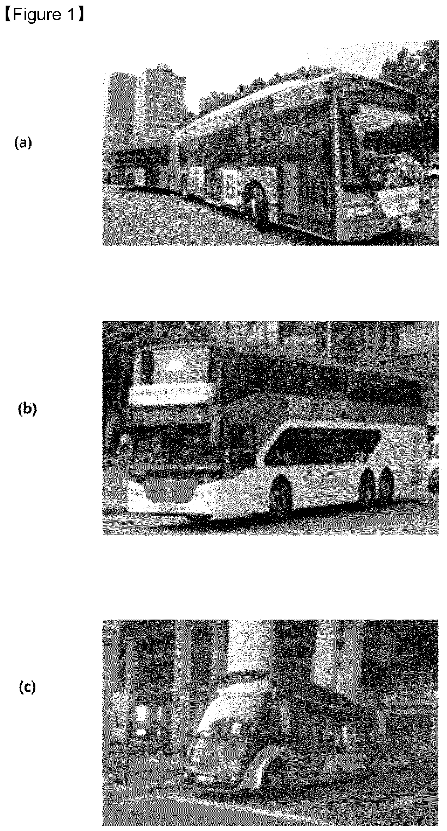

FIG. 1(a) to 1(c) are showing embodiments of conventional special bus systems. As 25% of regional bus users are concentrated on commuting to work, there is a big difference in the number of bus users over time. In particular, in the case of commuting time, there are cases in which all passengers cannot board the bus due to insufficient capacity compared to passengers. This phenomenon not only causes inconvenience to passengers, but also reduces the interval between vehicle dispatches, which has adverse effects in terms of driving safety for drivers. In order to increase the capacity of the existing bus, articulated buses (FIG. 1(a)) and double-decker buses (FIG. 1(b)) have been introduced and utilized. In the case of such a specially manufactured bus, it has the advantage of increasing the capacity of the bus, but the manufacturing cost is high due to the characteristics of the specially manufactured vehicle, and the maintenance of the vehicle is also difficult due to the special structure. In addition, even in a situation where the demand for capacity is insufficient, the operation may be performed without changing the capacity, resulting in inefficient operation.

In particular, the articulated bus is a system in which the rear vehicle is physically connected to the front vehicle and is operated while the connecting portion is deflected. Although this has the effect of increasing the passenger capacity, as shown in FIG. 1(a), when turning, the rear vehicle turns more inward than the front vehicle, so the driver must additionally consider this and turn with a larger turning radius. In addition, when driving on a road having a severe inclination and entering the slope, a phenomenon in which the driving force of the vehicle is insufficient and the lower part of the vehicle may come into contact with the road surface. Therefore, there are restrictions on the route.

Double-decker buses are more prone to overturn than regular buses due to their high overall height. Therefore, speed limitation is inevitable and operation is restricted on routes including bridges. In addition, an area loss occurs due to an in-vehicle bridge, inconvenience to passengers occurs due to the use of stairs, and an increase in getting on and off time.

Bimodal tram (FIG. 1(c)) is a type of induction bus in which a magnet buried underground serves as a rail, and is an articulated bus that is automatically steered by magnetic induction. These bimodal trams are not only able to operate on specific routes, but also require high cost to construct the routes.

Vehicles such as articulated buses, double-decker buses, and bimodal trams have a production cost several times higher than that of general buses due to the characteristics of specially manufactured vehicles, and due to their special structure, maintenance of the vehicle is also difficult.

As a means to increase the capacity without changing the structure of the vehicle, if the autonomous platooning control technique currently being developed in each country is used, the rear vehicle can accurately follow the vehicle in front, allowing a small number of drivers to operate many vehicles. However, this is a study that has been continuously developed for the past few decades, and it is very far from achieving the level of perfection that can be used in actual roads. In particular, 100% safe control of the distance between vehicles within a few meters is a very difficult technology that has not yet been completed, and in particular, there is no way to secure safety in the event of a system failure.

[Disclosure]

[Technical Problem]

The present invention was devised to solve such problems and an object of the present invention is to provide a bus system that enables flexible passenger capacity change according to need, while increasing the passenger capacity of the bus, lowering the manufacturing cost and enabling smooth maintenance, as well as ensuring safety in the event of a sudden failure or error of the system.

In addition, other object of the present invention is to provide a bus system that does not require additional training or attention of the driver due to such problems in driving and that does not lose the motor performance of the vehicle compared to the existing general bus by minimizing the width of the road occupied by the vehicle (hereinafter, 'turning width') and enabling smooth driving on the slope.

[Technical solution]

In order to achieve the above object, there is provided a method of controlling, by a control device mounted on a rear vehicle (hereinafter, 'rear vehicle control device'), the rear vehicle having a link joint for connecting one end of a mechanical link (hereinafter, 'link') which is connected to a front vehicle, for following a driving trajectory of the front vehicle, comprising the steps of: (a) receiving information related to driving (hereinafter, 'driving information') of the front vehicle from a control device mounted on the front vehicle (hereinafter, 'front vehicle control device'); (b) detecting driving information of the rear vehicle; (c) acquiring information related to movements of the link (hereinafter, 'link information'); and, (d) performing control to follow the driving trajectory of the front vehicle using the driving information and the link information.

The driving information may include manipulation information including steering angle, acceleration or deceleration information of the corresponding vehicle and sensor information including information detected by inertial sensor of the vehicle and in-wheel sensor of each wheel.

The link information may include an angle between the link and the front vehicle and an angle between the link and the rear vehicle.

The step (d) may include the steps of: (d1) calculating a difference (hereinafter, 'rear vehicle position error') between a current position of the rear vehicle and a position of the front vehicle before a predetermined time in order to follow the driving trajectory of the front vehicle using the driving information and the link information; (d2) calculating a control parameter by performing lateral feedback control in a direction in which the calculated rear vehicle position error becomes zero (0); and, (d3) controlling a steering wheel of the rear vehicle to follow the driving trajectory of the front vehicle according to the calculated control parameter. Preferably, the method further comprises, between the step (d2) and the step (d3), the steps of: (d21) calculating, by using the driving information, a lateral feed-forward control parameter which is a parameter for turning control of the rear vehicle based on a past turning input of the front vehicle; and, (d22) calculating a lateral control parameter by adding the parameter calculated in the step (d2) and the lateral feed-forward control parameter, wherein the control parameter of the step (d3) is the lateral control parameter calculated in the step (d22).

Preferably, the method further comprises, after the step (a), the steps of: (e1) calculating, by using the driving information and the link information, a target speed of the rear vehicle that minimizes a force applied to the link; (e2) calculating a control parameter by performing longitudinal feedback control so that the speed of the rear vehicle converges to the target speed of the rear vehicle; and, (e3) controlling the speed of the rear vehicle according to the calculated control parameter.

Preferably, the method further comprises, between the step (e2) and the step (e3), the steps of: (e21) calculating, by using the driving information, a longitudinal feed-forward control parameter which is deceleration/acceleration information at a past time point of the front vehicle; (e22) calculating a longitudinal control parameter by adding the parameter calculated in the step (e2) and the longitudinal feed-forward control parameter, wherein the control parameter of the step (e3) is the longitudinal control parameter calculated in the step (e22).

Preferably, the method further comprises the step of: (f) transmitting an abnormal signal to the front vehicle control device when normal operation is impossible due to a failure or error in the rear vehicle or the control system of the rear vehicle. Preferably, the method further comprises the step of: (g) applying, when a steering wheel of the rear vehicle is stuck due to a failure of the control system during turning and turning ability is lost, a braking force to the steering wheel, whereby a lateral friction force is lost by braking the rear vehicle so that the vehicle is driven by lateral force by the link.

According to other aspect of the present invention, there is provided a control device mounted on a rear vehicle (hereinafter, 'rear vehicle control device'), the rear vehicle having a link joint for connecting one end of a mechanical link (hereinafter, 'link') which is connected to a front vehicle, comprising: at least one processor; and at least one memory for storing computer-executable instructions, wherein the computer-executable instructions stored in the at least one memory, when executed by the at least one processor, causes the at least one processor to perform operations including: (a) receiving information related to driving (hereinafter, 'driving information') of the front vehicle from a control device mounted on the front vehicle (hereinafter, 'front vehicle control device'); (b) detecting driving information of the rear vehicle; (c) acquiring information related to movements of the link (hereinafter, 'link information'); and, (d) performing control to follow the driving trajectory of the front vehicle using the driving information and the link information.

According to another aspect of the present invention, there is provided a method of providing, by a control device mounted on a front vehicle (hereinafter, 'front vehicle control device'), the front vehicle having a link joint for connecting one end of a mechanical link (hereinafter, 'link') which is connected to a rear vehicle, driving information of the front vehicle, comprising the steps of: (a) detecting the driving information of the front vehicle; and, (b) transmitting the driving information to a rear vehicle control device.

Preferably, the method further comprises the steps of: (c1) obtaining information related to the movement of the link (hereinafter, 'link information'); and, (c2) transmitting the link information to the rear vehicle control device.

Preferably, the method further comprises the steps of: (d) informing driver of the front vehicle, when an abnormal signal transmitted by a vehicle control system of the rear vehicle is received in an event that normal operation is impossible due to a failure or error in the rear vehicle or a control system of the rear vehicle, of abnormalities through an alarm system.

According to another aspect of the present invention, there is provided a control device mounted on a front vehicle (hereinafter, 'front vehicle control device'), the front vehicle having a link joint for connecting one end of a mechanical link (hereinafter, 'link') which is connected to a rear vehicle, comprising: at least one processor; and at least one memory for storing computer-executable instructions, wherein the computer-executable instructions stored in the at least one memory, when executed by the at least one processor, causes the at least one processor to perform operations including: (a) detecting the driving information of the front vehicle; and, (b) transmitting the driving information to a rear vehicle control device.

According to another aspect of the present invention, there is provided A bus system connected by a mechanical link, comprising: a front vehicle equipped with the front vehicle control device of claim 14; a rear vehicle equipped with the rear vehicle control device of claim 10; and a link that mechanically connects the front vehicle and the rear vehicle, wherein the rear vehicle is driven to follow a driving trajectory of the front vehicle under the control of the rear vehicle control device. The rear vehicle may be driven while minimizing forces applied to the link during driving of the front vehicle and the rear vehicle under control of the rear vehicle control device.

The link may be configured to be detachable, and the bus system may be configured to be operated with only one of the front vehicle and the rear vehicle by separating the link.

[Advantageous Effects]

According to the present invention, it has the effect of providing a bus system in which the passenger capacity of the bus is increased, the manufacturing cost is lowered, smooth maintenance is possible, safety is guaranteed in case of a sudden failure or error of the system, and flexible passenger capacity change is possible as needed.

It also has the effect of providing a bus system in which, by minimizing the turning width of the vehicle and allowing smooth driving on the slope, there is no loss of motor performance compared to the existing general bus, and additional training or attention of the driver is not required due to such problems in driving.

[Description of Drawings]

FIG. 1 is a view showing examples of conventional special bus systems.

FIG. 2 is a view showing the operation of the conventional articulated bus when turning or entering the intersection of a slope and a flat land.

FIG. 3 is a view showing the operation of the bus system of the present invention when turning or entering the intersection of a slope and a flat land.

FIG. 4 is a conceptual diagram of a bus system of the present invention.

FIG. 5 is a view for explaining the concept of estimating the trajectory of the front bus when the bus system of the present invention is operated.

FIG. 6 is a view for explaining an embodiment of a method of minimizing a force acting on a link when the bus system of the present invention is operated, and an embodiment of a method of estimating the trajectory of a front bus.

FIG. 7 shows a sequence of a longitudinal control method.

FIG. 8 shows a sequence of a lateral control method.

FIG. 9 is a flowchart showing the steps of performing control by the control device of the front bus and the control device of the rear bus in the bus system of the present invention.

FIG. 10 is a view showing a comparison of the width occupied when operating a rotating section (hereinafter, 'turning width') by the conventional articulated bus and the bus system of the present invention.

FIG. 11 is a view showing simulation results of turning performance of the bus system of the present invention.

[Mode for Invention]

Hereinafter, exemplary embodiments of the present invention will be described in detail with reference to the accompanying drawings. Prior to the description of the present invention, it will be noted that the terms and wordings used in the specification and the claims should not be construed as general and lexical meanings, but should be construed as the meanings and concepts that agree with the technical spirits of the present invention, based on the principle stating that the concepts of the terms may be properly defined by the inventors to describe the invention in the best manner. Therefore, because the examples described in the specification and the configurations illustrated in the drawings are merely for the preferred embodiments of the present invention but cannot represent all the technical sprints of the present invention, it should be understood that various equivalents and modifications that may replace them can be present.

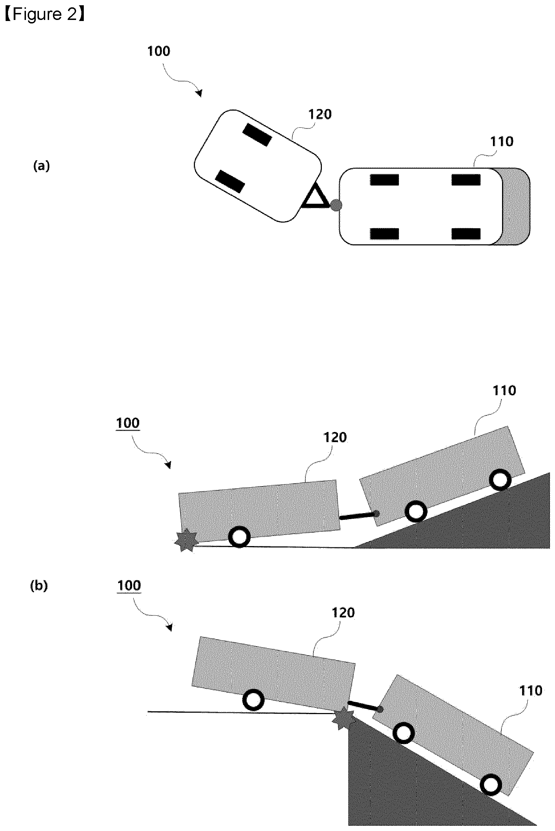

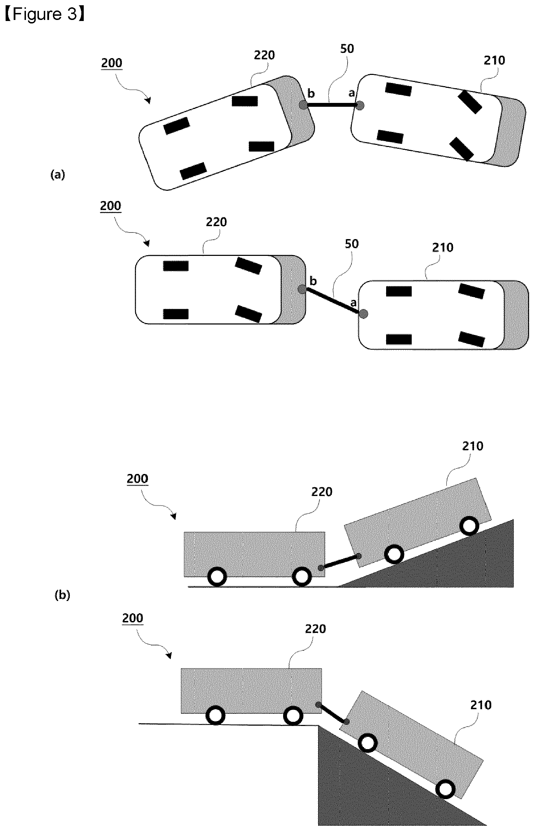

FIG. 2 is a view showing the operation of the existing articulated bus when turning or entering the intersection of a slope and flat land, and FIG. 3 is a diagram showing the operation of the bus system of the present invention when turning or entering the intersection of a slope and flat land.

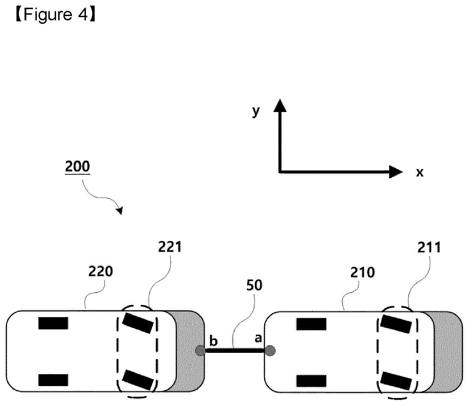

FIG. 2(a) is a view expressing the degree of freedom during rotation of the front vehicle 110 and the rear vehicle 120 of the articulated bus 100, and FIG. 3(a) is a conceptual diagram expressing the degree of freedom that can be obtained due to the universal joint of both ends a and b of the link 50 connecting the front vehicle 210 and the rear vehicle 220 of the bus system 200 of the present invention. In FIG. 3(a), two degrees of freedom are obtained in lateral motion through the universal joints of both ends a and b of the front vehicle 210 and the rear vehicle 220 and, compared to the articulated bus 100 of FIG. 2(a) which has one degree of freedom only at one end, that is, a or b, the freedom of operation of the rear vehicle can be increased. Through this, it is possible to control the tracking of the front vehicle path, which is physically impossible in the conventional articulated bus 100, which will be described later with reference to FIGs. 4 to 6. In addition, in order to effectively adjust the inter-vehicle distance according to the driving situation, the length of the link 50 may be actively adjusted.

FIGs. 2(b) and 3(b) are views showing the ramp entry state of the articulated bus 100 and the ramp entry state of the bus system 200 of the present invention, respectively. Referring to FIG. 2(b), the rear vehicle 120 of the articulated bus 100 has a collision risk at point 11 at the start of uphill driving, and a collision risk at point 12 at the start of downhill driving. Referring to FIG. 3(b), in the case of the bus system 200 of the present invention, since both ends a and b of the front vehicle 210 and the rear vehicle 220 are connected by a universal joint, it is possible to reduce the risk of collision at the time of entering the ramp as shown in FIG. 3(b).

FIG. 4 is a conceptual diagram of a bus system 200 of the present invention. In FIG. 4, axis-x denotes a traveling direction of the vehicle, and axis-y denotes a lateral direction. The front vehicle 210 and the rear vehicle 220 are connected by a mechanical link 50 and, at the same time, the operation information of the front vehicle 210, the sensor information of the front vehicle 210, and the information detected by the sensor present in the link 50, that is, the link information, are transmitted to the rear vehicle 220 by wire or wirelessly. The steering wheel 211 of the front vehicle 210 is controlled by the driver, and acceleration or deceleration of the front vehicle 210 is also controlled by the driver. Hereinafter, 'driving information' will be used as a term encompassing sensor information and operation information.

Among the driving information, the operation information includes information on steering angle, acceleration, deceleration, and the like. The steering angle refers to information detected by the angle of the steering wheel controlled by the driver, and the acceleration and deceleration information is also information sensed when the driver presses the accelerator and deceleration pedals. Such steering angle, acceleration, and deceleration information are already detectable information in a conventional vehicle.

Among the driving information, sensor information includes, for example, an inertial sensor and a wheel speed sensor of each wheel.

Link information includes information measured relative motion and force between the front vehicle 210 and the rear vehicle 220 via sensors inside the link 50, such as a sensor that detects rotation angles between the link 50 and the front vehicle 210 and between the link 50 and the rear vehicle 220, and a sensor that detects the transmitted force applied to the link 50, etc.

In the present invention, such operation information, sensor information, and link information are transmitted to the rear vehicle 220 to be used for autonomous driving control in the rear vehicle 220. In the link information, information detected by a sensor inside the link 50 may be sent directly from the link 50 to the rear vehicle 220. Or, the front vehicle 210 may collect information detected by a sensor inside the link 50 and transmit the same to the rear vehicle 220. Alternatively, a method in which the rear vehicle 220 directly acquires information sensed by a sensor inside the link 50 may be applied.

As described above, the front vehicle 210 and the rear vehicle 220 are connected by a mechanical link 50, and both ends a and b of the link 50 are fastened through a universal joint. That is, it has degrees of freedom with respect to the lateral positions and travel angles of the front vehicle 210 and the rear vehicle 220. The link 50 may serve to transmit operation information, sensor information, or link information of the front vehicle 210 to the rear vehicle 220 by wire through an electronic connection. Of course, as described above, the communication between the front vehicle 210 and the rear vehicle 220 is not only made by wire but also wirelessly.

Therefore, the rear vehicle 220 receives the operation information, sensor information, or link information as described above, and performs turning control, driving and braking control based on these information, and, accordingly, for a normal driving situation other than an emergency situation, is driven in a manner that minimizes the force applied to the link 50 rather than being pulled by force by the front vehicle 210. In addition, since not only the front vehicle 210 but also the rear vehicle 220 provide driving force and braking force, there is no shortage of driving force on a slope.

That is, the two vehicles operate as if they were one vehicle. Therefore, it can be operated without changing the existing bus route. In general, since the distance between vehicles during operation is much longer than the distance between individual vehicles, the space occupied by two vehicles connected by the link 50 during operation has little difference from the space occupied by one vehicle. That is, while the road share remains nearly the same, the volume of transport doubles precisely.

The front vehicle 210 is driven by the driver in the same way as a normal vehicle, and, since the rear vehicle 220 is connected by a mechanical link 50, the driver of the front vehicle 210 can safely stop the rear vehicle 220 even when a failure or error occurs in the rear vehicle 220 or the control system.

Since the rear vehicle 220 is controlled based on the relative position and angle between the vehicles estimated by the link 50 and the driving information transmitted from the front vehicle 210, the biggest advantage is that the system operates without the front sensor, which is the biggest problem with the current autonomous driving control system.

When normal operation is impossible due to a failure or error in the rear vehicle 220 or the control system of the rear vehicle 220, the rear vehicle control device detecting such failure or error transmits an abnormal signal to the front vehicle control device, and the front vehicle control device notifies the driver of the front vehicle 210 of the abnormality through various warning systems such as a display or an alarm sound, and the driver of the front vehicle 210 can stop the entire bus system 200 safely.

In particular, even when the steering wheel 221 of the rear vehicle 220 is stuck and the turning ability is lost due to a failure of the control system during turning, the rear vehicle control device brakes the rear vehicle 220 by applying a braking force to the steering wheel 221 of the rear vehicle 220, thereby losing lateral frictional force and driving the vehicle with the lateral force by the link 50. In this way, lateral stability can be ensured.

In the above, the term 'control system' is a term used to encompass the control system of the rear vehicle 220, and even in this case, the rear vehicle control device is configured to operate regardless thereof.

The bus system 200 of the present invention can flexibly adjust the length of the connected vehicles through the attachment and detachment of the link 50 at the busy commuting time and other times. For example, in rush hour, two or more buses are connected by link(s) and operated, and when passengers are off-peak, the link is separated and only one bus may be operated, thereby maximizing the efficiency of transportation volume and energy use.

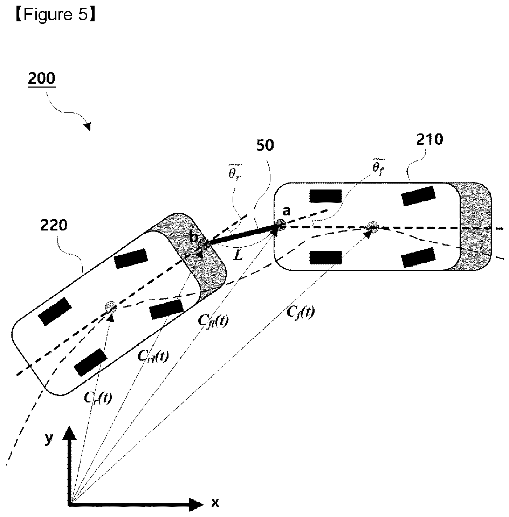

FIG. 5 is a view for explaining the concept of following the trajectory of the front vehicle 210 when the bus system 200 of the present invention is operated.

[Equation 1]

$$\left\| C_{fl}(t) - C_{rl}(t) \right\| = L$$

[Equation 2]

$$C_r(t) = C_f(t - \tau)$$

As shown in the drawing, $C_f(t)$ is the position vector of the center of gravity of the front vehicle 210, $C_r(t)$ is the position vector of the center of gravity of the rear vehicle 220, and $C_{fl}(t)$ is the position vector of the link junction of the rear end of the front vehicle 210, and $C_{rl}(t)$ is the position vector of the link junction of the front end of the rear vehicle 220.

Equation 1 represents a condition for maintaining the length of the link 50 between the front vehicle 210 and the rear vehicle 220. That is, since the bus system 200 of the present invention has a configuration in which the front vehicle 210 and the rear vehicle 220 are connected by a mechanical link 50, the length of the link 50 between the front vehicle 210 and the rear vehicle 220 should be kept constant. Equation 2 means that the position $C_r(t)$ of the rear vehicle 220 at time t is the same as the position $C_f(t-\tau)$ of the front vehicle 210 at a time ahead by $\tau$. That is, the rear vehicle 200 performs turning control, driving and braking control to satisfy the condition of the above equations.

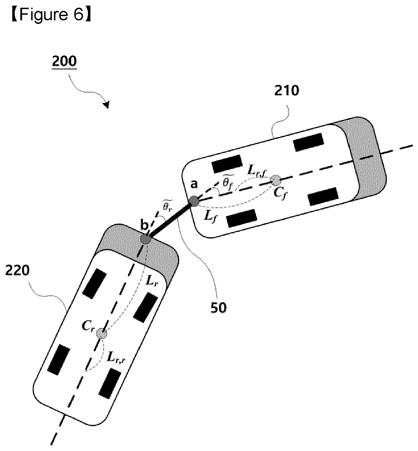

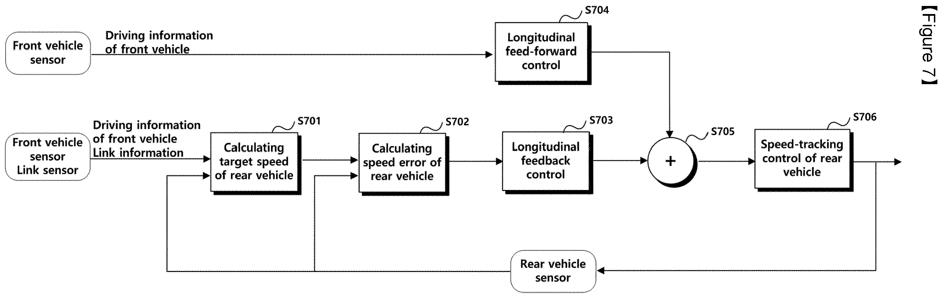

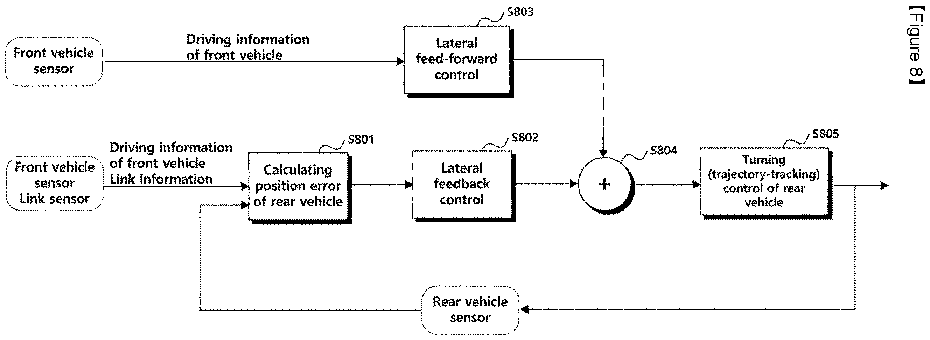

FIG. 6 is a diagram for explaining an embodiment of a longitudinal control method for minimizing the force acting on the link 50 during operation of the bus system 200 of the present invention, and of a lateral control method for following the trajectory of the front vehicle 210. FIG. 7 is a diagram illustrating a sequence of a longitudinal control method, and FIG. 8 is a diagram illustrating a sequence of a lateral control method.

1) Longitudinal control

An embodiment of a longitudinal control method for minimizing the force acting on the link 50 during operation of the bus system 200 of the present invention will be described below with reference to FIGs. 6 and 7.

For longitudinal control, the speed value of the rear vehicle 220 that minimizes the force applied to the link 50 may be obtained, and the speed of the rear vehicle 220 may be controlled to achieve such a speed. The information needed to find the speed is:

Speed ($v_f$) of the front vehicle 210,
Distance ($l_{r,f}$) from the center of gravity of the front vehicle 210 to the rear wheel of the front vehicle 210,
Distance ($L_f$) from the center of gravity of the front vehicle 210 to the link junction of the rear end of the front vehicle 210,
Rotational angular velocity (rf) of yaw of the front vehicle 210,

Angle ($\widetilde{\theta_f}$) between the front vehicle 210 and the link 50,
Speed ($v_r$) of the rear vehicle 220,
Distance ($l_{r,r}$) from the center of gravity of the rear vehicle 220 to the rear wheels of the rear vehicle 220,
Distance ($L_r$) from the center of gravity of the rear vehicle 220 to the link junction of the front end of the rear vehicle 220,
Rotational angular velocity ($r_r$) of yaw of the rear vehicle 220,

Angle ($\widetilde{\theta_r}$) between the rear vehicle 220 and the link 50, etc.

Above information is data that can be measured in real time with existing vehicle internal sensors (inertial sensor, wheel speed sensor) and link internal sensor or can be measured before driving.
Among these information, in each of the front vehicle 210 and the rear vehicle 220,

1) $l_{r,f}$ and $l_{r,r}$, which are the distances from the center of gravity to the rear wheel, and $L_f$ and $L_r$, which are the distances from the center of gravity to the linkjunction, are pre-measured data,
2) vehicle speeds $v_f$ and $v_r$ can be measured from a sensor (one of the vehicle sensors) that measures the speed of the wheel in each vehicle (included in the sensor information),
3) rotation angular velocities of yaw, $r_f$ and $r_r$, can be measured by a 3-axis acceleration sensor (inertial sensor) (one of the vehicle sensors) in each vehicle (included in sensor information),

4) angles $\widetilde{\theta_f}$ and $\widetilde{\theta_r}$ between the vehicle and the link 50 may be measured by a sensor (link sensor) built into the link 50 (included in link information).

Based on these information, the control device of the rear vehicle 220 (not shown, hereinafter referred to as a 'rear vehicle control device') minimizes the force acting on the link 50 when the bus system 200 operates. The target speed is obtained by the following Equation 3-1 (S701).

[Equation 3-1]

$$v_{r,tar} = \frac{1}{\cos\left(\frac{l_{r,r}}{v_r}r_r + \widetilde{\theta_r}\right)}\left[v_f \cos\left(\frac{l_{r,f}}{v_f}r_f + \widetilde{\theta_f}\right) + L_f r_f \sin\widetilde{\theta_f} + L_r r_r \sin\widetilde{\theta_r}\right]$$

[Equation 3-2]

$$v_{r,tar} - v_r$$

In Equation 3-1, $v_r$ is the speed of the rear vehicle 220 at the current time point, and $v_{r,tar}$ is the target speed of the rear vehicle 220 at the next time point, and from $v_r$ and the calculated $v_{r,tar}$ value, the rear vehicle control device calculates the speed error with the target speed value of the rear vehicle 220 as shown in Equation 3-2 (S702), and then through longitudinal feedback control (S703), calculates the longitudinal feedback control parameters. This longitudinal feedback control parameter is a parameter for how much to decelerate or accelerate the speed in the longitudinal direction in the direction of convergence to the target speed value of the rear vehicle 220, that is, in the direction in which the speed error becomes zero.
In addition, the rear vehicle control device performs longitudinal feed-forward control (S704) from information related to acceleration, deceleration, etc. of the front vehicle 210 (hereinafter, 'deceleration information') among the above-described operation information. Through this, a longitudinal feed-forward control parameter is calculated (S704). The longitudinal feed-forward control parameter calculated through the longitudinal feed-forward control (S704) is also a parameter for how much to decelerate or accelerate the speed in the longitudinal direction. In particular, if the current time point is t, deceleration/acceleration information (longitudinal feed-forward control parameter) at the time t-τ of the front vehicle 210 is calculated.

The rear vehicle control device sums the longitudinal feedback control parameter calculated through the longitudinal feedback control (S703) and the longitudinal feed-forward control parameter calculated through the longitudinal feed-forward control (S704) and calculates a longitudinal control parameter for the deceleration/acceleration control of the rear vehicle 220 (S705). The longitudinal direction deceleration control of the rear vehicle 220 is performed according to the longitudinal control parameter (S706).

Such longitudinal control, that is, control to minimize the force applied to the link 50, means that the speed of the rear vehicle 220 is controlled so that the distance between the link junctions of the front vehicle 210 and the rear vehicle 220 is as close as possible to L (refer to FIG. 6) which is the length of the link 50. Accordingly, $v_{r,tar}$ also act as parameters for tracking the longitudinal trajectory to be controlled by the rear vehicle 220 to follow the trajectory of the front vehicle 210 when going straight and turning.

In this way, the control responsiveness can be improved by using the feedback control and the feed-forward control together.

2) Lateral control

A lateral control method in the rear vehicle 220 for following the trajectory of the front vehicle 210 when turning will be described below with reference to FIGs. 5, 6 and 8.

If the current position vector of the rear vehicle 220 for following the front vehicle 210 is $\vec{C_r}(t)$ and the target position vector is $\overrightarrow{C_{r,tar}}(t)$, it should be $\overrightarrow{C_{r,tar}}(t) = \vec{C_f}(t - \tau)$. For lateral control of the rear vehicle 220, steering control for reducing the difference between $\overrightarrow{C_{r,tar}}(t)$ and, $\vec{C_r}(t)$ is performed through feedback control such as PID. That is, a steering control that converges $\overrightarrow{C_{r,tar}}(t) - \vec{C_r}(t)$ to 0 is performed. The position error of the rear vehicle 220 for control is $\overrightarrow{C_{r,tar}}(t) - \vec{C_r}(t) = \vec{C_f}(t - \tau) - \vec{C_r}(t)$, which can be modified as Equation (4).

[Equation 4]

$$\overrightarrow{C_{r,tar}}(t) - \vec{C_r}(t) = \left( \vec{C_f}(t - \tau) - \vec{C_r}(t - \tau) \right) - \left( \vec{C_r}(t) - \vec{C_r}(t - \tau) \right)$$

The value of the first parenthesis in the right hand side of Equation 4 may be calculated using relative angle information of the link 50, and the value of the second parenthesis in the right hand side may be calculated using speed information of the rear vehicle 220.

In the right hand side of Equation 4, the value of the first parenthesis may be expressed as Equation 5, and the value of the second parenthesis may be expressed as Equation 6.

[Equation 5]

$$\left( \vec{C_f}(t - \tau) - \vec{C_r}(t - \tau) \right) = (L_r + L_l cos\widetilde{\theta_r} + L_f cos\widetilde{\theta_f}, \ L_l sin\widetilde{\theta_r} + L_f sin\widetilde{\theta_f})$$

[Equation 6]

$$\left( \vec{C_r}(t) - \vec{C_r}(t - \tau) \right) = \int_{t-\tau}^{t} \vec{v_r}(t') \, dt'$$

In the right-hand term of Equation 5, the first component represents the relative position in the longitudinal direction, and the second component represents the relative position in the lateral direction.

That is, the position error of the rear vehicle 220 of Equation 4 may be calculated by subtracting the right term of Equation 6 from the right term of Equation 5 (S801).

In the end, from Equations 5 and 6, the rear vehicle control device calculates the position error of the rear vehicle 220 shown in Equation 4 (S801), by using $L_r$, $L_l$ (length of the link), $L_f$ measured in advance, and by continuously collecting $\widetilde{\theta_f}$, $\widetilde{\theta_r}$ (included in link information) which is the angle of link 50 measured by the link inside sensor and

the speed $\overrightarrow{v_r}(t)$ (included in the sensor information) of the rear vehicle 220 measured by the wheel speed sensor of the rear vehicle 220 (S801). From this, lateral feedback control is performed to control the lateral position so that the position error $\overrightarrow{C_{r,tar}}(t)$ - $\overrightarrow{C_r}(t)$ of the rear vehicle 220 converges to zero (S802). That is, the lateral feedback control parameters ($\delta_{r,FB}$) are calculated through the lateral feedback control (S802).

In addition, the rear vehicle control device receives the information on the steering angle among the manipulation information, and through the lateral feed-forward control (S803), the lateral feed-forward control parameter ($\delta_{r,FF}$) according to Equation 7 is calculated (S803). The lateral feed-forward control parameters $\delta_{r,FF}$ calculated as described above are steering input values for the rear vehicle 220 based on the past turning input of the front vehicle 210. When only feedback control is performed, there is a performance limit due to a time delay from measuring information with a sensor to calculating steering input. In the case of feed-forward control, response is fast since real-time measurement data is not required and, when performed together with feedback control, effective improvement of control performance is achieved.

That is, in the case of feed-forward control, it has the advantage of fast response and robustness to sensor noise, and in the case of feedback control, it is possible to cope with various situations by designing with the goal of reducing the position error of the rear vehicle. When feedback control and feed-forward control are performed together, it enables quick response and coping with various situations.

[Equation 7]

$$\delta_{r,FF}(t) = \delta_f(t - \tau)$$

The rear vehicle control device adds the lateral feedback control parameter $\delta_{r,FB}$ calculated through such lateral feedback control and the lateral feed-forward control parameter $\delta_{r,FF}$ calculated through lateral feed-forward control (S804); calculates a lateral control parameter for turning of the rear vehicle 220 to follow the trajectory of the front vehicle 210, that is, how much it should rotate (S804); and performs turning control of the rear vehicle 220 according to this lateral control parameter (S805).

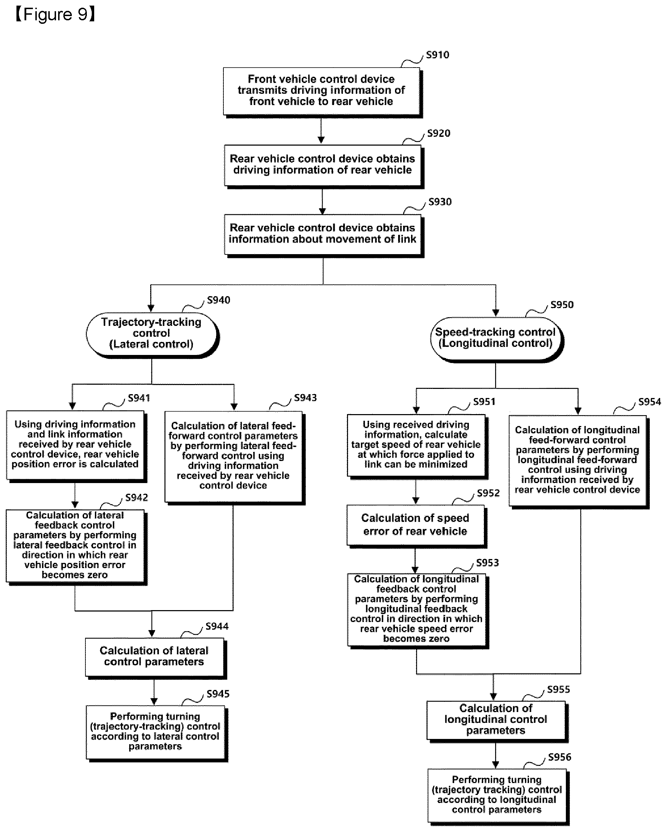

FIG. 9 is a flowchart showing the steps of controlling the front vehicle 210 by the control device (not shown, hereinafter referred to as a 'front vehicle control device') and the rear vehicle control device in the bus system 200 of the present invention.

Referring to FIGs. 4 to 8, the method of controlling the rear vehicle 220 to follow the trajectory of the front vehicle 210 in the bus system 200 of the present invention and the method of minimizing the x-direction force applied to the link 50 have already been described in detail. The control steps will be briefly described below using the flowchart. Although, in the description below, control for tracking trajectory of the front vehicle 210 (lateral control) is first performed and control to minimize the x-direction force applied to the link 50 (longitudinal control) is performed afterwards for convenience, these two controls are performed in parallel during driving and neither one have to be performed first.

The control device (not shown) of the front vehicle 210 transmits the driving information of the front vehicle 210 to the control device (not shown) of the rear vehicle 220 (S910). Accordingly, the driving information of the front vehicle 210 received by the rear vehicle 220 includes operation information and sensor information from the front vehicle 210 as described above.

In addition, the control device of the rear vehicle 220 obtains driving information of the rear vehicle 220 detected by various sensors provided in the rear vehicle 220 (S920). The operation information and sensor information as described above are also included in the driving information of the rear vehicle 220.

In addition, the control device of the rear vehicle 220 obtains information about the movement of the link 50, that is, link information (S930). The link information includes an angle between the link 50 and the front vehicle 210 and an angle between the link 50 and the rear vehicle 220. At this time, as described above, the link information may transmit information detected by a sensor inside the link 50 to the rear vehicle 220 directly from the link 50, or the front vehicle 210 may collect information detected by a sensor inside the link 50 and transmit it to the rear vehicle 220, or a method in which the rear vehicle 220 directly acquires information sensed by a sensor inside the link 50 may be applied. Inclusive of these cases, it is expressed as "the control device of the rear vehicle 220 acquires link information".

In the above, although the steps in which the control device of the rear vehicle 220 obtains the driving information of the front vehicle 210, the driving information of the rear vehicle 220, and the link information are sequentially described (S910, S920, S930), such information is not necessarily acquired in this order but is acquired by the control device of the rear vehicle 220 from time to time without a special order.

The rear vehicle control device mainly performs lateral control of the rear vehicle 220 during turning in order to follow the driving trajectory of the front vehicle 210 using such driving information, that is, sensor information, manipulation information, and link information (S940), the method as an embodiment has been described in detail using Equations 4 to 6 while explaining the lateral control with reference to FIGs. 5 and 6, which is summarized as follows.

A difference (hereinafter, 'rear vehicle position error') between the position before the predetermined time $\tau$ of the front vehicle 210 (i.e., $\overrightarrow{C_{r,tar}}(t) = \overrightarrow{C_f}(t - \tau)$) and the current position of the rear vehicle 220 (i.e., $\overrightarrow{C_r}(t)$) is calculated (S941, S801). Then, the control device of the rear vehicle 220 calculates the lateral feedback control parameter in a direction in which the calculated rear vehicle position error becomes 0, for example, in a direction in which $\overrightarrow{C_{r,tar}}(t) - \overrightarrow{C_r}(t)$ converges to 0 through performing lateral feedback control (S942, S802).

In the lateral direction control, turning (trajectory-tracking) control, in which the rear vehicle 220 follows the turning trajectory of the front vehicle 210, may be performed using only the feedback control result (that is, the lateral feedback control parameter), but feed-forward control may be performed in parallel as follows.

That is, calculating a lateral feed-forward control parameter by performing lateral feed-forward control using steering information, which is one of the manipulation information of the front vehicle 210, among the driving information (S943, S803); Then, the lateral control parameter is calculated by adding the lateral feedback control parameter and the lateral feed-forward control parameter described above (S944, S804); calculating a lateral control parameter by summing the above-described lateral feedback control parameter and lateral feed-forward control parameter (S944, S804); using these lateral control parameters, performing, by the rear vehicle control device, turning (trajectory-tracking) lateral control to cause the rear vehicle 220 to follow the turning trajectory of the front vehicle 210 (S945, S805).

The following steps S951 and S956 are, as speed-tracking control that converges the speed of the rear vehicle 220 to a target speed so that the x-direction force applied to the link 50 can be minimized, process in which the rear vehicle control device performs longitudinal control on the rear vehicle 220 (S950). Regarding this, the method as an embodiment has been described in detail with reference to FIG. 6 and using Equation 3, which is summarized as follows.

The rear vehicle 220 calculates, from the above-described received information, a target speed value of the rear vehicle 220 in which the x-direction force applied to the link 50 can be minimized (S951, S701); calculates the difference between the target speed value and the current speed of the rear vehicle 220, that is, the speed error (S952, S702); calculates the longitudinal feedback control parameters by performing longitudinal feedback control in the direction in which the speed error becomes 0 (S953, S703).

In the longitudinal control, the speed-tracking control for automatically controlling the acceleration or deceleration of the rear vehicle 220 may be performed using only the feedback control result (that is, the longitudinal feedback control parameter), but feed-forward control may also be performed in parallel as follows. That is, calculating longitudinal feed-forward control parameters by performing longitudinal feed-forward control using deceleration/acceleration information, which is one of the manipulation information, from the driving information of the front vehicle 210 (S954, S704); calculating longitudinal control parameter by summing the longitudinal feedback control parameter and the longitudinal feed-forward control parameter (S955, S705); using this, performing, by the rear vehicle control device, speed-tracking longitudinal control for automatically controlling acceleration or deceleration of the rear vehicle 220 (S956, S706).

Through the lateral control and longitudinal control as described so far, the rear vehicle 220 follows the turning trajectory of the front vehicle 210, so that it can be operated without an increase in the turning width occupied in the lateral direction when turning, and, by minimizing the force applied to the link 50, the force transmitted from the link 50 to the rear vehicle 220 and the front vehicle 210 can also be minimized.

In the bus system 200 of the present invention, without expensive front sensors such as lidar, radar, vision, etc. as in an autonomous vehicle that follows the vehicle in front without a link, the rear vehicle 220 can follow the trajectory of the front vehicle using a low-cost mechanical link 50 in a sufficiently stable manner. In particular, the above expensive front sensors are rather difficult to guarantee complete stability at present, and if a problem occurs, not only the rear vehicle is separated from the front vehicle while driving, but also serious problems in driving safety may occur.

In contrast, the bus system 200 of the present invention does not cause a problem of being separated from the front vehicle by the mechanical link 50 connection. In addition, using driving information (manipulation information, sensor information) and link information received from the front vehicle 210 or obtained from various sensors of the rear vehicle 220, the bus system 200 of the present invention provides has an autonomous driving function that follows the trajectory of the front vehicle while requiring minimum force to the link. Furthermore, as described above with reference to FIG. 4, even when the steering wheel 221 of the rear vehicle 220 is stuck and the turning ability is lost due to a failure of the control system during turning, the bus system 200 of the present invention can stop safely.

When normal operation is impossible due to a failure or error in the rear vehicle or the control system of the rear vehicle 220, the rear vehicle control device that senses this transmits an abnormal signal to the front vehicle control device, notifying the driver of the front vehicle 210 of an abnormality, and by the driver of the front vehicle 210, the entire bus system 200 can stop safely. In particular, when the steering wheel 221 is stuck and the turning ability is lost due to a malfunction of the control system during turning, the rear vehicle control device applies a braking force to the steering wheel 221 to brake the rear vehicle 220, thereby the lateral friction force is lost so that the vehicle is driven by the lateral force by the link 50, which ensuring lateral stability.

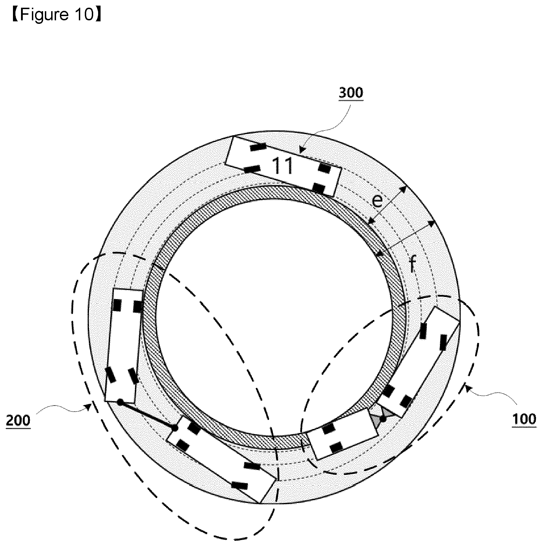

FIG. 10 is a diagram illustrating a comparison of the width occupied during rotational section operation between the conventional articulated bus 100 and the bus system 200 of the present invention.

The width e represents the turning width of the single vehicle 300 or the bus system 200 of the present invention. As described above, the rear vehicle 220 of the bus system 200 of the present invention autonomously drives to follow the path of the front vehicle 210 using the link information including the operation information and sensor information received from the front vehicle 210 and the link information including the link angle received from the link 50 and the x-direction force information acting on the link. Accordingly, it has the same turning width as compared to the single vehicle 300. However, in the case of the articulated bus 100, it has a turning width f greater than the turning width e, and in a limited corner situation, the driver must take this into consideration and drive with a larger turning width.

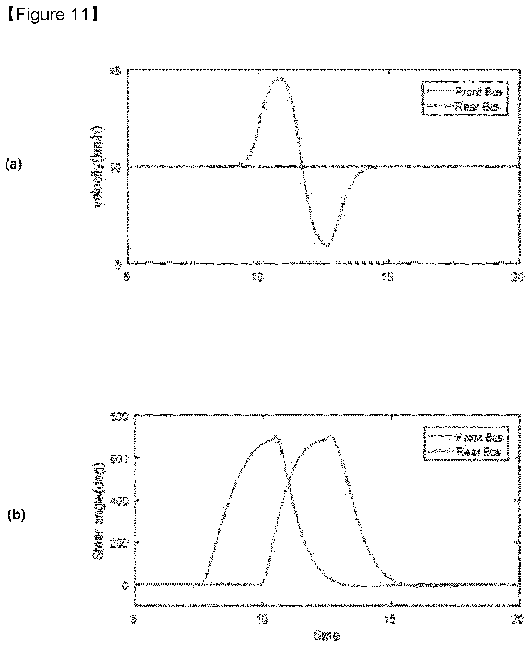

FIG. 11 is diagrams showing simulation results of turning performance of the bus system 200 of the present invention.

FIG. 11(a) shows the magnitude of the speed over time of the front vehicle 210 (blue line) and the speed over time of the rear vehicle 220 (red color) during the operation of the bus system 200 of the present invention. As shown, while the front vehicle 210 is traveling at a constant speed, the speed of the rear vehicle 220 is changed in the turning area 81. The reason is that the front vehicle 210 and the rear vehicle 220 are connected by a mechanical link 50, so that the distance between the link connection ends a and b in each of the front vehicle 210 and the rear vehicle 220 must be kept constant (indicated by 'L' in FIG. 6).

FIG. 11(b) is a view showing the steering wheel rotation angle over time of the front vehicle 210 (blue line) and the steering wheel rotation angle over time of the rear vehicle 220 (red line). Since the rear vehicle 220 follows the path of the front vehicle 220 as it is, the steering wheel rotation angle of the rear vehicle 220, at regular time intervals as shown, changes substantially similar to the steering wheel rotation angle of the front vehicle 210.

**Claims**

1. A method of controlling, by a control device mounted on a rear vehicle (hereinafter, 'rear vehicle control device'), the rear vehicle having a link joint for connecting one end of a mechanical link (hereinafter, 'link') which is connected to a front vehicle, for following a driving trajectory of the front vehicle, comprising the steps of:

   (a) receiving information related to driving (hereinafter, 'driving information') of the front vehicle from a control device mounted on the front vehicle (hereinafter, 'front vehicle control device');
   (b) detecting driving information of the rear vehicle;
   (c) acquiring information related to movements of the link (hereinafter, 'link information'); and,
   (d) performing control to follow the driving trajectory of the front vehicle using the driving information and the link information.

2. The method according to claim 1, wherein the driving information includes manipulation information including steering angle, acceleration or deceleration information of the corresponding vehicle and sensor information including information detected by inertial sensor of the vehicle and in-wheel sensor of each wheel.

3. The method according to claim 1, wherein the link information includes an angle between the link and the front vehicle and an angle between the link and the rear vehicle.

4. The method according to claim 1, wherein the step (d) includes the steps of:

   (d1) calculating a difference (hereinafter, 'rear vehicle position error') between a current position of the rear vehicle and a position of the front vehicle before a predetermined time in order to follow the driving trajectory of the front vehicle using the driving information and the link information;
   (d2) calculating a control parameter by performing lateral feedback control in a direction in which the calculated rear vehicle position error becomes zero (0); and,
   (d3) controlling a steering wheel of the rear vehicle to follow the driving trajectory of the front vehicle according to the calculated control parameter.

5. The method according to claim 4, further including, between the step (d2) and the step (d3), the steps of:

   (d21) calculating, by using the driving information, a lateral feed-forward control parameter which is a parameter for turning control of the rear vehicle based on a past turning input of the front vehicle; and,
   (d22) calculating a lateral control parameter by adding the parameter calculated in the step (d2) and the lateral feed-forward control parameter,

wherein the control parameter of the step (d3) is the lateral control parameter calculated in the step (d22).

6. The method according to claim 1, further comprising, after the step (a), the steps of:

(e1) calculating, by using the driving information and the link information, a target speed of the rear vehicle that minimizes a force applied to the link;
(e2) calculating a control parameter by performing longitudinal feedback control so that the speed of the rear vehicle converges to the target speed of the rear vehicle; and,
(e3) controlling the speed of the rear vehicle according to the calculated control parameter.

7. The method according to claim 6, further comprising, between the step (e2) and the step (e3), the steps of:

(e21) calculating, by using the driving information, a longitudinal feed-forward control parameter which is deceleration/acceleration information at a past time point of the front vehicle;
(e22) calculating a longitudinal control parameter by adding the parameter calculated in the step (e2) and the longitudinal feed-forward control parameter,

wherein the control parameter of the step (e3) is the longitudinal control parameter calculated in the step (e22).

8. The method according to claim 1, further comprising the step of:
(f) transmitting an abnormal signal to the front vehicle control device when normal operation is impossible due to a failure or error in the rear vehicle or the control system of the rear vehicle.

9. The method according to claim 1, further comprising the step of:
(g) applying, when a steering wheel of the rear vehicle is stuck due to a failure of the control system during turning and turning ability is lost, a braking force to the steering wheel, whereby a lateral friction force is lost by braking the rear vehicle so that the vehicle is driven by lateral force by the link.

10. A control device mounted on a rear vehicle (hereinafter, 'rear vehicle control device'), the rear vehicle having a link joint for connecting one end of a mechanical link (hereinafter, 'link') which is connected to a front vehicle, comprising:

at least one processor; and
at least one memory for storing computer-executable instructions,
wherein the computer-executable instructions stored in the at least one memory,
when executed by the at least one processor, causes the at least one processor to perform operations including:

(a) receiving information related to driving (hereinafter, 'driving information') of the front vehicle from a control device mounted on the front vehicle (hereinafter, 'front vehicle control device');
(b) detecting driving information of the rear vehicle;
(c) acquiring information related to movements of the link (hereinafter, 'link information'); and,
(d) performing control to follow the driving trajectory of the front vehicle using the driving information and the link information.

11. A method of providing, by a control device mounted on a front vehicle (hereinafter, 'front vehicle control device'), the front vehicle having a link joint for connecting one end of a mechanical link (hereinafter, 'link') which is connected to a rear vehicle, driving information of the front vehicle, comprising the steps of:

(a) detecting the driving information of the front vehicle; and,
(b) transmitting the driving information to a rear vehicle control device.

12. The method according to claim 11, further comprising the steps of:

(c1) obtaining information related to the movement of the link (hereinafter, 'link information'); and,
(c2) transmitting the link information to the rear vehicle control device.

13. The method according to claim 11, further comprising the step of:
(d) informing driver of the front vehicle, when an abnormal signal transmitted by a vehicle control system of the rear vehicle is received in an event that normal operation is impossible due to a failure or error in the rear vehicle or a control system of the rear vehicle, of abnormalities through an alarm system.

14. A control device mounted on a front vehicle (hereinafter, 'front vehicle control device'), the front vehicle having a link joint for connecting one end of a mechanical link (hereinafter, 'link') which is connected to a rear vehicle, comprising:

at least one processor; and
at least one memory for storing computer-executable instructions,
wherein the computer-executable instructions stored in the at least one memory,
when executed by the at least one processor, causes the at least one processor to perform operations including:

(a) detecting the driving information of the front vehicle; and,
(b) transmitting the driving information to a rear vehicle control device.

15. A bus system connected by a mechanical link, comprising:

a front vehicle equipped with the front vehicle control device of claim 14;
a rear vehicle equipped with the rear vehicle control device of claim 10; and
a link that mechanically connects the front vehicle and the rear vehicle
wherein the rear vehicle is driven to follow a driving trajectory of the front vehicle under the control of the rear vehicle control device.

16. The bus system according to claim 15, wherein the rear vehicle is driven while minimizing forces applied to the link during driving of the front vehicle and the rear vehicle under control of the rear vehicle control device.

17. The bus system according to claim 15, wherein the link is configured to be detachable, and wherein the bus system is configured to be operated with only one of the front vehicle and the rear vehicle by separating the link.

【Figure 1】

(a)

(b)

(c)

【Figure 2】

(a)

(b)

【Figure 3】

(a)

(b)

【Figure 4】

【Figure 5】

【Figure 6】

【Figure 7】

S706 — Speed-tracking control of rear vehicle

S705 — (+)

S704 — Longitudinal feed-forward control

S703 — Longitudinal feedback control

S702 — Calculating speed error of rear vehicle

S701 — Calculating target speed of rear vehicle

Rear vehicle sensor

Driving information of front vehicle

Driving information of front vehicle
Link information

Front vehicle sensor

Front vehicle sensor
Link sensor

[Figure 8]

EP 3 988 414 A1

【Figure 9】

【Figure 10】

【Figure 11】

(a)

(b)

## INTERNATIONAL SEARCH REPORT

International application No.

**PCT/KR2020/008121**

| A. | CLASSIFICATION OF SUBJECT MATTER |
|---|---|

**B60W 30/165**(2012.01)i; **B60W 30/10**(2006.01)i; **B60W 40/02**(2006.01)i; **B60W 10/20**(2006.01)i; **B60W 30/045**(2012.01)i; **B60W 40/105**(2012.01)i; **B60W 50/029**(2012.01)i; **B60W 50/14**(2012.01)i; **B62D 47/02**(2006.01)i; **G08G 1/00**(2006.01)i

According to International Patent Classification (IPC) or to both national classification and IPC

| B. | FIELDS SEARCHED |
|---|---|

Minimum documentation searched (classification system followed by classification symbols)

B60W 30/165; B60K 31/00; B60T 7/18; B60T 8/58; B60W 30/00; B62D 53/00; G08G 1/09; G08G 1/16; B60W 30/10; B60W 40/02; B60W 10/20; B60W 30/045; B60W 40/105; B60W 50/029; B60W 50/14; B62D 47/02; G08G 1/00

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차량(vehicle), 링크(link), 궤도(trajectory), 추종(following), 통신(communication), 정보(information)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 07-200991 A (JOSEPH, Sconick) 04 August 1995. See paragraphs [0010], [0021], [0029] and [0040] and figure 1. | 11,14 |
| Y | | 1-10,12,13,15-17 |
| Y | JP 2001-310651 A (TOYOTA MOTOR CORP.) 06 November 2001. See paragraphs [0024], [0025], [0030] and [0036] and figure 1. | 1-10,12,15-17 |
| Y | JP 2000-113399 A (HONDA MOTOR CO., LTD.) 21 April 2000. See paragraphs [0009] and [0035] and figure 1. | 4-7 |
| Y | JP 4012353 B2 (NISSAN DIESEL MOTOR CO., LTD.) 21 November 2007. See paragraphs [0015] and [0019] and figure 1. | 8,9,13 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 October 2020** | **13 October 2020** |

| Name and mailing address of the ISA/KR | Authorized officer |
|---|---|
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2020/008121** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2012-0193154 A1 (WELLBORN et al.) 02 August 2012. See paragraphs [0009]-[0016] and figure 1. | 1-17 |

Form PCT/ISA/210 (second sheet) (July 2019)

**EP 3 988 414 A1**

**INTERNATIONAL SEARCH REPORT**
Information on patent family members

| International application No. |
| --- |
| **PCT/KR2020/008121** |

| Patent document cited in search report | | | Publication date (day/month/year) | Patent family member(s) | | | Publication date (day/month/year) |
| --- | --- | --- | --- | --- | --- | --- | --- |
| JP | 07-200991 | A | 04 August 1995 | None | | | |
| JP | 2001-310651 | A | 06 November 2001 | None | | | |
| JP | 2000-113399 | A | 21 April 2000 | JP | 3524400 | B2 | 10 May 2004 |
| JP | 4012353 | B2 | 21 November 2007 | JP | 2001-199322 | A | 24 July 2001 |
| US | 2012-0193154 | A1 | 02 August 2012 | US | 8496078 | B2 | 30 July 2013 |

Form PCT/ISA/210 (patent family annex) (July 2019)